# EUROPÄISCHE PATENTANMELDUNG

(11) **EP 0 692 676 A2**
(43) Veröffentlichungstag der Anmeldung: **17.01.1996**
(21) Anmeldenummer: 95107384.0
(22) Anmeldetag: 16.05.1995
(51) Int. Cl.: F23G 5/00, F23L 7/00

(54) **Verfahren zur Verwertung organische Bestandteile enthaltender Stoffe und Einschmelzung der anorganischen Bestandteile durch Verbrennung**

(30) Priorität: 16.07.1994 DE 4425211
(71) Anmelder: Babcock Lentjes Kraftwerkstechnik GmbH, D-46049 Oberhausen (DE)
(72) Erfinder: Jelich, Werner, D-44803 Bochum (DE); Klauke, Friedrich, Dr., D-40878 Ratingen (DE); König, Dieter, Dr., D-45525 Harringen (DE)
(74) Vertreter: Müller, Jürgen, Dipl.-Ing.

(57) **Zusammenfassung**

Der Hausmüll (1) wird auf eine für den Prozeß geeignete Größe vorgeschreddert (2), in einer cryogenen Stufe (3) mit kaltem Stickstoff (4), der in einer Luftzerlegungsanlage (5) aus Luft (8) gewonnen wird, versprödet und vorzerkleinert (6). Anschließend erfolgt eine Abscheidung der magnetischen Metallanteile (7).

In einer weiteren Stufe (9) wird der Hausmüll auf eine für den Verbrennungsprozeß geeigneten Korngröße aufgemahlen und für den Verbrennungsprozeß aufbereitet. Über ein geeignetes Dosiersystem wird der Brennstaub dem Brenner zugeführt und in einer Schmelzkammer (10) unter Zugabe von reinem Sauerstoff (11) aus der Luftzerlegungsanlage (5) oder einem Sauerstoff-/Luftgemisch verbrannt.

Die Schmelzkammer (10) kann mit einer ungekühlten Ausmauerung, einer gekühlten Ausmauerung oder einer gasdicht verschweißten Rohrwand versehen werden. Die schmelzflüssige Schlacke (12) wird abgekühlt und aus dem System ausgeschleust. Die Abwärme der heißen Rauchgase wird in einem Abhitzesystem (13) zur Dampferzeugung (14) genutzt.

## Beschreibung

Die Erfindung betrifft ein Verfahren zur Verwertung organische Bestandteile enthaltender Stoffe und Einschmelzung der anorganischen Bestandteile durch Verbrennung mit den Merkmalen des Oberbegriffes des Patentanspruches 1.

Ein solches Verfahren eignet sich besonders für die Entsorgung von belasteten Reststoffen, da unter den Bedingungen der Hochtemperaturverbrennung alle in den belasteten Reststoffen enthaltende Schadstoffe thermisch gespalten werden und die anfallenden mineralischen Rückstände aufgeschmolzen und in eine praktisch nicht auslaugbare Form überführt werden.

Die Hochtemperaturverbrennung, wie z.B. in Schmelzkammerzyklonen, setzt allerdings bei dem Einsatz von festen Einsatzgütern einen aufgemahlenen Brennstaub voraus. Ein solcher Einsatz ist bei Abfallstoffen, die aufgrund ihrer Beschaffenheit nicht- oder schwermahlbar sind, ohne Vorbehandlung kaum realisierbar. Zu solchen Einsatzgütern gehören extrem heterogene Stoffe wie Hausmüll, die sowohl schwermahlbare Bestandteile wie z.B. Kunststoffolien als auch Metalle enthalten. Das gleiche gilt für Altreifen die Metalle enthalten, welche vor der Aufmahlung sinnvollerweise zu entfernen sind. Es ist bekannt, diese Abfallstoffe vor einer Vergasung oder Hochtemperaturverbrennung durch eine vorgeschaltete oder in den Vergasungs- oder Verbrennungsprozeß integrierte Pyrolyse vorzubehandeln. Die Pyrolyseprodukte werden in der anschließenden Vergasung oder Verbrennung vorzugsweise mit technisch reinem Sauerstoff oder einem Sauerstoff/Luft/Gemisch umgesetzt. Ein solcher Pyrolyseprozeß ist mit einem erhöhten technischen Aufwand und mit dem möglichen Entstehen von giftigen Gasen verbunden.

Es ist weiterhin bekannt, Materialien durch eine Tieftemperaturbehandlung (Cryogenie) mit Hilfe von verflüssigten tiefsiedenden Gasen zu verspröden, um sie leichter aufmahlen zu können und in ihre Bestandteile zu zerlegen. Eine solche Verfahrensweise wird bei der Wiedergewinnung von Metallen aus Kabeln oder Altreifen angewendet.

Der Erfindung liegt die Aufgabe zugrunde, für das gattungsgemäße Verfahren ein vereinfachtes Verfahren zu schaffen, mit dessen Hilfe heterogene Abfallstoffe mit nicht- oder schwermahlbaren Bestandteilen in den Verbrennungsraum eingetragen werden können.

Diese Aufgabe wird bei einem gattungsgemäßen Verfahren erfindungsgemäß durch die kennzeichnenden Merkmale des Patentanspruches 1 gelöst. Vorteilhafte Ausgestaltungen der Erfindungen sind in den Unteransprüchen angegeben.

Bei dem erfindungsgemäßen Verfahren wird der Effekt der Versprödung durch die an sich bekannte Tieftemperaturbehandlung ausgenutzt, um einen so heterogenen Einsatzstoff wie Hausmüll aufbereitet in eine Hochtemperaturverbrennung einzutragen, ohne eine aufwendige Vorbehandlung durch Pyrolyse anwenden zu müssen. Durch die Tieftemperaturbehandlung werden die Abfallstoffe versprödet, sodaß die organischen Bestandteile des Hausmülls anschließend problemlos von metallischen Bestandteilen getrennt, zerkleinert und verbrannt werden können. Als Nebeneffekt kann ein weitgehend artenreiches Metall gewonnen werden.

In der Tieftemperaturbehandlung wird der Abfallstoff auf eine geeignete Korngröße zerkleinert. Diese Korngröße bestimmt sich aus der erforderlichen Verweilzeit des zerkleinerten Abfallstoffes in dem Verbrennungsraum, die für den vollständigen Umsatz der organischen Bestandteile und das Aufschmelzen der mineralischen und der eventuell noch vorhandenen metallischen Bestandteile erforderlich ist. Der zerkleinerte Abfallstoff wird über ein geeignetes Eintragsystem in den Verbrennungsraum eingespeist.

Für die Tieftemperaturbehandlung kann jeder inerte Kälteträger, insbesondere in Form eines tiefgekühlten oder eines verflüssigten tiefsiedenden Gases, verwendet werden. Vorzugsweise wird Stickstoff eingesetzt, der in einer Luftzerlegungsanlage gewonnen wird, die mit der Verbrennungsanlage gekoppelt ist und die als Nebenprodukt den als Verbrennungsmittel dienenden Sauerstoff liefert. Durch den Einsatz von reinem Sauerstoff, anstelle von Luft, kann der Verbrennungsprozeß wesentlich effizienter gestaltet werden, außerdem wird dadurch eine geringere Rauchgasmenge erzeugt, was vorteilhaft für die nachgeschaltete Rauchgasreinigung ist. In diesem Fall kann der Sauerstoff, der für die Tieftemperaturbehandlung selbst wertlos ist, günstig genutzt werden.

In Verbrennungsanlagen mit kleinen Durchsatzleistungen, in denen eine eigene Luftzerlegungsanlage unwirtschaftlich wäre, kann die Tieftemperaturbehandlung zur Versprödung der Abfallstoffe auch mit einem extern bereitgestellten Kältemittel durchgeführt werden.

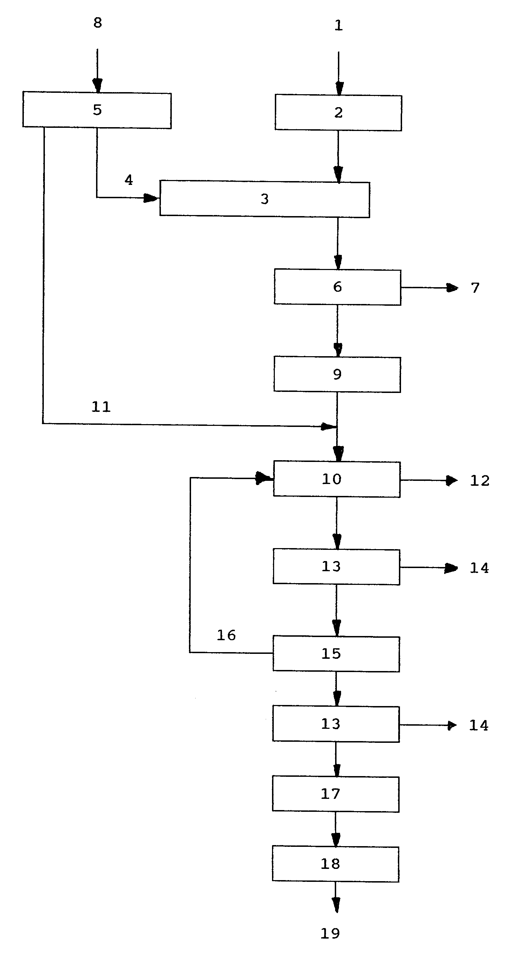

Ein Ausführungsbeispiel der Erfindung wird im folgenden an einem in der Zeichnung dargestellten Fließschema näher erläutert.

Der Hausmüll (1) wird auf eine für den Prozeß geeignete Größe vorgeschreddert (2), in einer cryogenen Stufe (3) mit kaltem Stickstoff (4), der in einer Luftzerlegungsanlage (5) aus Luft (8) gewonnen wird, versprödet und vorzerkleinert (6). Anschließend erfolgt eine Abscheidung der magnetischen Metallanteile (7).

In einer weiteren Stufe (9) wird der Hausmüll auf eine für den Verbrennungsprozeß geeigneten Korngröße aufgemahlen und für den Verbrennungsprozeß aufbereitet. Über ein geeignetes Dosiersystem wird der Brennstaub dem Brenner zugeführt und in einer Schmelzkammer (10) unter Zugabe von reinem Sauerstoff (11) aus der Luftzerlegungsanlage (5) oder einem Sauerstoff-/Luftgemisch verbrannt.

Die Schmelzkammer (10) kann mit einer ungekühlten Ausmauerung, einer gekühlten Ausmauerung oder einer gasdicht verschweißten Rohrwand versehen werden. Die schmelzflüssige Schlacke (12) wird abgekühlt und aus dem System ausgeschleust. Die Abwärme der heißen Rauchgase wird in einem Abhitzesystem (13) zur Dampferzeugung (14) genutzt.

## Patentansprüche

1. Verfahren zur Verwertung organische Bestandteile enthaltender Abfallstoffe durch Verbrennung mit einem sauerstoffhaltigen Verbrennungsmittel bei Temperaturen oberhalb des Schmelzpunktes der mineralischen und metallischen Bestandteile der Abfallstoffe, mindestens oberhalb 1200 °C, wobei als Verbrennungsprodukte ein, weitgehend von aromatischen, polyzyklischen, heterozyklischen oder halogenierten Kohlenwasserstoffen freies Rauchgas und eine aus dem Schmelzfluß erstarrte, praktisch nicht auslaugbare Schlacke entstehen, dadurch gekennzeichnet, daß der zu verbrennende Abfallstoff durch eine Schockkühlung mit einem inerten Kälteträger versprödet, in diesem Zustand zerkleinert und anschließend in den Verbrennungsraum eingetragen wird.

2. Verfahren nach Anspruch 1, dadurch gekennzeichnet, daß der verspödete Abfallstoff auf eine für den Eintrag in den Verbrennungsraum und auf eine der zu Verfügung stehenden Verweilzeit entsprechende, für den vollständigen Umsatz der organischen Bestandteile und das Einschmelzen der mineralischen und metallischen Bestandteile notwendige Korngröße zerkleinert wird.

3. Verfahren nach Anspruch 1, dadurch gekennzeichnet, daß die Versprödung der Abfallstoffe durch eine Tieftemperaturbehandlung (Cryogenie) erfolgt.

4. Verfahren nach Anspruch 3, dadurch gekennzeichnet, daß Stickstoff als Kälteträger verwendet wird, der in einer Luftzerlegungsanlage erzeugt wird.

5. Verfahren nach Anspruch 3, dadurch gekennzeichnet, daß der in der Luftzerlegungsanlage anfallende Sauerstoff als Verbrennungsmittel genutzt wird.

6. Verfahren nach Anspruch 3, dadurch gekennzeichnet, daß der Kälteträger extern bereitgestellt wird.

7. Verfahren nach Anspruch 6, dadurch gekennzeichnet, daß der Abfallstoff mit Luft oder sauerstoffangereicherter Luft verbrannt wird.

8. Verfahren nach Anspruch 3 bis 5, dadurch gekennzeichnet, daß der Energiebedarf zum Betrieb der Luftzerlegungsanlage durch die Abwärmenutzung der heißen bei der Verbrennung entstehenden Rauchgase gedeckt wird.

9. Verfahren nach einem der Ansprüche 1 bis 6, dadurch gekennzeichnet, daß der Eintrag der zerkleinerten Abfallstoffe in die Brennkammer über einen Schnecken-Extruder-Eintrag und/oder Slurry-Eintrag und/oder Trockenstaub-Schleusen-Eintrag erfolgt.

10. Verfahren nach einem der Ansprüche 1 bis 9,dadurch gekennzeichnet, daß der im Rauchgas enthaltene Flugstaub in einem Staubabscheider abgeschieden und zum größten Teil in den Verbrennungsprozeß zurückgeführt wird.
